# EUROPEAN PATENT SPECIFICATION

(11) **EP 4 307 406 B1**
(45) Date of publication and mention of the grant of the patent: **29.07.2026**
(21) Application number: 23770958.9
(22) Date of filing: 31.01.2023
(51) Int. Cl.: H01M 4/04, H01M 4/131, H01M 4/36, H01M 4/505, H01M 4/525, H01M 4/587, H01M 4/62, H01M 10/0525, H01M 10/0567, H01M 4/02, H01M 4/38, H01M 4/48

(54) **LITHIUM SECONDARY BATTERY**
LITHIUMSEKUNDÄRBATTERIE
BATTERIE SECONDAIRE AU LITHIUM

(30) Priority: 17.03.2022 KR 20220033398; 30.01.2023 KR 20230011695
(43) Date of publication of application: 17.01.2024
(73) Proprietor: LG Energy Solution, Ltd., Seoul 07335 (KR)
(72) Inventor: JEONG, You Kyeong, Daejeon 34122 (KR); AHN, Kyoung Ho, Daejeon 34122 (KR); HAN, Jun Hyeok, Daejeon 34122 (KR); SHIN, Won Kyung, Daejeon 34122 (KR); LEE, Won Tae, Daejeon 34122 (KR); JI, Su Hyeon, Daejeon 34122 (KR); OH, Young Ho, Daejeon 34122 (KR)
(74) Representative: Hoffmann Eitle
(86) International application number: PCT/KR2023/001392
(87) International publication number: WO 2023/177078

(56) References cited:
- EP-A1- 3 933 980
- CN-A- 112 952 096
- JP-A- 2000 082 494
- KR-A- 20150 050 507
- KR-A- 20160 081 395
- KR-A- 20190 022 382
- KR-A- 20200 034 373
- KR-A- 20210 052 812
- US-A1- 2020 152 978

## Description

### [Technical Field]

The present invention relates to a lithium secondary battery, and more particularly, to a lithium secondary battery which includes a coating layer, which contains specific contents of a lithium element (Li), a sulfur element (S), and a nitrogen element (N), on a positive electrode mixture layer including a positive electrode active material, and thus has excellent high-rate discharge and low-temperature discharge performance.

This application claims priority from Korean Patent Application No. 10-2022-0033398, filed on March 17, 2022, and Korean Patent Application No. 10-2023-0011695, filed on January 30, 2023.

### [Background of the Invention]

In recent years, secondary batteries have been widely applied to small devices such as portable electronic devices, as well as medium and large devices such as battery packs for hybrid vehicles or electric vehicles, or power storage devices.

Such secondary batteries include a nickel-cadmium battery, a nickel-metal hydride battery, a nickel-hydrogen battery, a lithium secondary battery, and the like. Among them, research on a lithium secondary battery, which shows a 2-fold higher discharge voltage than batteries using the existing aqueous alkaline solution and also has a high energy density per unit weight and can be rapidly charged, has emerged.

Lithium cobalt oxide has been used as a positive electrode active material of the lithium secondary battery, and lithium metal, a lithium alloy, crystalline or amorphous carbon, a carbon composite, or the like has been used as a negative electrode active material. The secondary battery is manufactured by coating a current collector with a composition including an electrode active material with appropriate thickness and length and drying the current collector or molding an electrode active material itself into a shape of a film to manufacture a positive electrode and a negative electrode, winding or stacking the positive electrode and the negative electrode with a separator serving as an insulator interposed therebetween to make an electrode assembly, putting the electrode assembly into a can or a similar container, and injecting an electrolyte into the can or similar container.

The lithium secondary battery thus manufactured is charged and discharged by repeating a process of intercalating and deintercalating lithium ions from a positive electrode active material (for example, a lithium metal oxide) of a positive electrode to a negative electrode active material (for example, graphite) of a negative electrode. Theoretically, the intercalation and deintercalation of lithium ions into the positive electrode active material layer is reversible, but a larger amount of lithium ions than the theoretical capacity of the positive electrode active material is actually consumed, and only a part of it is recovered during discharging. Therefore, a smaller amount of lithium ions is deintercalated during charging after the second cycle, but most of the deintercalated lithium ions are intercalated during charging.

As such, a difference in capacity shown in the first charge/discharge reaction refers to a loss of irreversible capacity, and such a loss of irreversible capacity is mainly caused by an electrolyte decomposition reaction at a surface of the electrode active material layer. In this case, a cathode electrolyte interface (CEI) film (a positive electrode electrolyte film) and a solid electrolyte interface (SEI) film (a solid electrolyte film) formed, respectively, on surfaces of active material layers of the positive and negative electrodes are obtained by an electrochemical reaction through the electrolyte decomposition.

When the electrolyte films formed on surfaces of the positive and negative electrodes are formed during the first charging, each of the electrolyte films serves as an ion tunnel while preventing a reaction of a carbon negative electrode or other materials with lithium ions during the repeated charge/discharge cycles for use in the battery, thereby allowing only lithium ions to flow through the ion tunnel. Here, the ion tunnel serves to prevent the collapse of a structure of the carbon negative electrode because lithium ions are solvated so that an electrolyte having a high molecular weight is co-intercalated into the carbon negative electrode together with organic solvents.

The additives used to constitute an electrolyte film formed on a surface of an electrode, and the thickness and/or uniformity of the manufactured electrolyte film, and the like have different effects on the battery, and thus the present inventors have tried to improve the performance of the secondary battery based on these results. Despite this effort, however, there is a problem in that it is difficult to improve the performance of the battery using an electrolyte film, particularly an electrolyte film positioned on a surface of the positive electrode. Specifically, even when the electrolyte films are formed on surfaces of the positive and negative electrodes using an additive, the uniformity of the electrolyte film formed on a surface of the positive electrode may be degraded, resulting in a slight effect of improving low-temperature output characteristics. When the added additive is not adjusted to a desired amount, a surface of the positive electrode may be decomposed due to the high-temperature exposure induced during the high-rate charge/discharge cycles, or an oxidation reaction may occur in the electrolyte, eventually resulting in degraded output characteristics.

Therefore, there is a need for development of a novel approach capable of improving the high-rate characteristics and low-temperature characteristics of the lithium secondary battery using an electrolyte film formed on a surface of the positive electrode.

### [Related Art Documents]

### [Patent Documents]

(Patent Document 1) Korea Patent Publication No. 10-2018-0106973
(Patent Document 2) EP 3 933 980 describes a positive electrode active material for a secondary battery which includes a lithium composite transition metal oxide including nickel (Ni), cobalt (Co), and manganese (Mn), wherein the lithium composite transition metal oxide includes 60 mol% or more of the nickel (Ni) among metals excluding lithium, and a coating layer is formed on surfaces of particles of the lithium composite transition metal oxide, wherein the coating layer includes a lithium-polymer compound which is formed by a reaction of a lithium by-product with a polymer.
(Patent Document 3) CN 112952096 describes a nitrogen-doped carbon-coated lithium-ion battery positive electrode material and a preparation method thereof.
(Patent Document 4) US 2020 152978 describes a positive active material, a rechargeable lithium battery including the same, and a method of preparing the same. The positive active material includes a lithium-containing composite oxide; and a sulfur-containing inorganic lithium compound, wherein the sulfur-containing inorganic lithium compound forms a coating layer on a surface of the lithium-containing composite oxide.
(Patent Document 5) JP 2000 082494 describes a flame-retardant non-aqueous electrolyte used for electrochemical devices such as secondary batteries.
(Patent Document 6) KR 20150050507 describes a lithium secondary battery including an ionomer having a fluoroalkyl sulfonate substituent in at least one component of a positive electrode, a negative electrode, and a separator.
(Patent Document 7) KR 20200034373 describes a lithium secondary battery comprising a composition for a gel polymer electrolyte and a gel polymer electrolyte formed therefrom.
(Patent Document 8) KR 20210052812 describes a positive electrode hybrid electrolyte for a solid secondary battery, a positive electrode including the same, a method of manufacturing the same, and a solid secondary battery including the same.

### [Disclosure]

### [Technical Problem]

The present invention is provided to solve at least some of the above problems. For example, an aspect of the present invention provides a lithium secondary battery having improved battery performance, particularly, high-rate characteristics and low-temperature characteristics, using an electrolyte film formed on a surface of a positive electrode, and a method of manufacturing the same.

### [Technical Solution]

To solve the above problems, according to one exemplary embodiment of the present invention, there is provided a lithium secondary battery, which includes:
an electrode assembly including a positive electrode, a negative electrode, and a separator interposed between the positive electrode and the negative electrode; and
an electrolyte composition including a non-aqueous organic solvent, a lithium salt, and an electrolyte additive,
wherein the positive electrode has a coating layer on a positive electrode mixture layer including a positive electrode active material, and
the coating layer contains 5 to 15 at% of a lithium element (Li), 1.0 to 4.0 at% of a sulfur element (S), and 0.5 to 3.0 at% of a nitrogen element (N).

In this case, the coating layer provided on the positive electrode mixture layer is a layer that is formed during the activation of the lithium secondary battery, and may be formed through an electrochemical reaction of some and/or all of the electrolyte additive in the electrolyte composition. In this case, the coating layer may have a thickness of 5 nm to 100 nm.

Also, the electrolyte additive included in the electrolyte composition may include a compound represented by the following Formula 1: 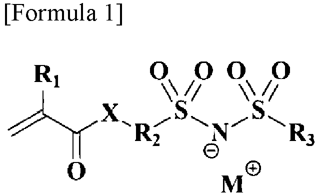 wherein:
R₁ is hydrogen or an alkyl group having 1 to 4 carbon atoms,
R₂ includes one or more of an alkylene group having 1 to 10 carbon atoms, an alkyleneoxy group having 1 to 10 carbon atoms, a cycloalkylene group having 5 to 10 carbon atoms, or 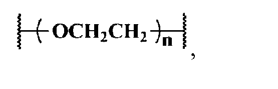
R₃ is a fluoro group, an alkyl group having 1 to 10 carbon atoms, an alkoxy group having 1 to 10 carbon atoms, or 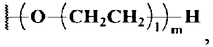 wherein one or more of hydrogen atoms included in the alkyl group, the alkoxy group, and 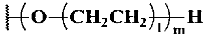 are optionally substituted with a fluorine atom,
X is an oxygen atom (O) or -NR₄,
R₄ is hydrogen or an alkyl group having 1 to 4 carbon atoms,
M includes one or more selected from lithium, sodium, potassium, a tetraalkylammonium having 1 to 4 carbon atoms, or a tetraalkylphosphonium having 1 to 4 carbon atoms,
l is an integer ranging from 1 to 6, and
m and n are each independently an integer ranging from 2 to 20.

Specifically, in Formula 1,
R₁ may be hydrogen or a methyl group,
R₂ may include one or more of a methylene group, an ethylene group, a propylene group, an oxymethylene group, an oxyethylene group, an oxypropylene group, a cyclopentylene group, a cyclohexylene group, a cycloheptylene group, 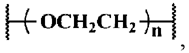 or 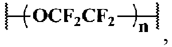
R₃ may be a fluoro group, a methyl group, an ethyl group, a propyl group, a methoxy group, an ethoxy group, 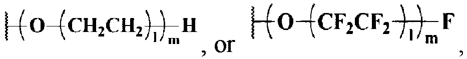
X may be an oxygen atom (O), -NH, or -NCH₃,
M may be lithium,
l may be an integer ranging from 1 or 2, and
m and n may each independently be an integer ranging from 2 to 10.

In addition, the electrolyte additive may be included at 0.01 to 5% by weight, based on a total weight of the electrolyte composition.

Also, the positive electrode mixture layer may include one or more positive electrode active materials selected from lithium metal oxides represented by the following Formulas 2 or 3:

[Formula 2] Liₓ[Ni_{y}Co_{z}Mn_{w}M¹ᵥ]O₂

[Formula 3] LiM²ₚMn₍₂₋ₚ₎O₄

wherein:
M¹ includes one or more elements selected from W, Cu, Fe, V, Cr, Ti, Zr, Zn, Al, In, Ta, Y, La, Sr, Ga, Sc, Gd, Sm, Ca, Ce, Nb, Mg, B, or Mo,
x, y, z, w, and v are in a range of 1.0 ≤ x ≤ 1.30, 0.5 ≤ y<1, 0<z ≤ 0.3, 0<w ≤ 0.3, 0 ≤ v ≤ 0.1, respectively, provided that y + z + w + v = 1,
M² is Ni, Co, or Fe, and
p is in a range of 0.05 ≤ p ≤ 0.7.

As one example, the positive electrode active material may include one or more selected from LiNi_{0.8}Co_{0.1}Mn_{0.1}O₂, LiNi_{0.6}Co_{0.2}Mn_{0.2}O₂, LiNi_{0.9}Co_{0.05}Mn_{0.05}O₂, LiNi_{0.6}Co_{0.2}Mn_{0.1}Al_{0.1}O₂, LiNi_{0.6}Co_{0.2}Mn_{0.15}Al_{0.05}O₂, LiNi_{0.7}Co_{0.1}Mn_{0.1}Al_{0.1}O₂, LiNi_{0.7}Mn_{1.3}O₄, LiNi_{0.5}Mn_{1.5}O₄, or LiNi_{0.3}Mn_{1.7}O₄.

In addition, the negative electrode may have a negative electrode mixture layer including a negative electrode active material on a negative electrode current collector, and the negative electrode active material may include one or more carbon materials selected from natural graphite, artificial graphite, expanded graphite, non-graphitizable carbon, carbon black, acetylene black, or ketjen black.

Also, the negative electrode active material may further include one or more silicon materials of silicon (Si), silicon carbide (SiC), or silicon oxide (SiO_{q}: provided that 0.8 ≤ q ≤ 2.5) in addition to the carbon material. In this case, the silicon material may be included at 1 to 20% by weight, based on a total weight of the negative electrode active material.

Furthermore, according to one exemplary embodiment of the present invention, there is provided a method of manufacturing a lithium secondary battery, which includes:
assembling a lithium secondary battery by injecting an electrolyte composition into a battery case having an electrode assembly inserted; and
charging the assembled secondary battery to an SOC of 40% to 70% to form a coating layer on a positive electrode mixture layer,
wherein the electrode assembly comprises a positive electrode comprising a positive electrode mixture layer including a positive electrode active material, a negative electrode, and a separator interposed between the positive electrode and the negative electrode,
wherein the electrolyte composition includes a non-aqueous organic solvent, a lithium salt, and an electrolyte additive, and
wherein the coating layer contains 5 to 15 at% of a lithium element (Li), 1.0 to 4.0 at% of a sulfur element (S), and 0.5 to 3.0 at% of a nitrogen element (N).

In this case, the charging may be performed at 25 to 70°C and a C-rate of 0.1C to 2.0C.

### [Advantageous Effects]

A lithium secondary battery according to the present invention has advantages of excellent high-rate discharge characteristics at room temperature as well as excellent discharge efficiency at low temperature when a coating layer containing specific contents of a lithium element, a sulfur element, and a nitrogen element is provided on a positive electrode mixture layer including a positive electrode active material.

### [Brief Description of the Drawings]

FIG. 1 is a graph showing the results of linear sweep voltammetric analyses of three-electrode batteries including electrolyte compositions (compositions of Preparation Example 1 and Comparative Preparation Example 1) used respectively in Example 1 and Comparative Example 1 according to the present invention.
FIG. 2 is a graph showing the results of differential capacity curve analyses of half-cell batteries including the electrolyte compositions (compositions of Preparation Example 1 and Comparative Preparation Example 1) used respectively in Example 1 and Comparative Example 1 according to the present invention.
FIG. 3 is a graph showing the capacities of the lithium secondary batteries manufactured in Example 1 and Comparative Example 1 during high-rate discharging.
FIG. 4 is a graph showing the capacities of the lithium secondary batteries manufactured in Example 1 and Comparative Example 1 during low-temperature discharging.

### [Detailed Description of the Invention]

The present invention may have various modifications and various examples, and thus specific examples of the present invention are described in detail in the detailed description.

However, it should be understood that the present invention is not intended to be limited to the specific embodiments, and includes all modifications, equivalents or alternatives within the spirit and technical scope of the present invention.

The terms "comprise," "include" and "have" used herein specify the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

Also, when a part of a layer, film, region or plate is disposed "on" another part, this includes not only a case in which one part is disposed "directly on" another part, but a case in which a third part is interposed therebetween. In contrast, when a part of a layer, film, region or plate is disposed "under" another part, this includes not only a case in which one part is disposed "directly under" another part, but a case in which a third part is interposed therebetween. In addition, in this application, "on" may include not only a case of disposed on an upper part but also a case of disposed on a lower part.

In addition, in the present invention, the expression "included as a main ingredient" may mean that a defined component is included at 50% by weight or more, 60% by weight or more, 70% by weight or more, 80% by weight or more, 90% by weight or more, or 95% by weight or more, based on the total weight. For example, the expression "graphite is included as a main ingredient in a negative electrode active material" means that graphite is included at 50% by weight or more, 60% by weight or more, 70% by weight or more, 80% by weight or more, 90% by weight or more, or 95% by weight or more, based on the total weight of the negative electrode active material. In some cases, it means that a negative electrode active material totally consists of graphite, and thus graphite is included 100%.

In the present invention, the expression "at%" means a percentage of one kind of atom relative to the total number of atoms.

Hereinafter, the present invention will be described in more detail.

### Lithium secondary battery

According to one exemplary embodiment of the present invention, there is provided a lithium secondary battery which includes:
an electrode assembly including a positive electrode, a negative electrode, and a separator interposed between the positive electrode and the negative electrode; and
an electrolyte composition including a non-aqueous organic solvent, a lithium salt, and an electrolyte additive,
wherein the positive electrode has a coating layer on a positive electrode mixture layer including a positive electrode active material, and
wherein the coating layer contains specific contents of a lithium element (Li), a sulfur element (S), and a nitrogen element (N).

The lithium secondary battery according to the present invention includes an electrode assembly in which a positive electrode, a separator, and a negative electrode are sequentially disposed; and an electrolyte composition having a form in which a lithium salt and an electrolyte additive are dissolved in a non-aqueous organic solvent, wherein the positive electrode provided in the electrode assembly has a coating layer formed on a surface of a positive electrode mixture layer including a positive electrode active material.

Herein, the coating layer is a layer that is formed during the initial charging, that is, activation, of the lithium secondary battery, and may be the same as the positive electrode electrolyte film (a cathode electrolyte interface; CEI), or may be an additional layer besides the cathode electrolyte interface (CEI) in some cases.

Also, the coating layer contains specific contents of a lithium element (Li), a sulfur element (S), and a nitrogen element (N). Specifically, the coating layer may contain 5 to 15 at%, more specifically 7 to 13 at%, or 8 to 13 at%, of the lithium element (Li). Also, the coating layer may contain 1 to 4 at%, more specifically 1.5 to 3.2 at%; 1.7 to 2.6 at%; or 2.0 to 2.6 at%, of the sulfur element (S). In addition, the coating layer may contain 0.5 to 3 at%, more specifically 0.7 to 2.2 at%; 0.7 to 1.6 at%; or 1.2 to 2.1 at%, of the nitrogen element (N).

As one example, the coating layer may include the lithium element (Li), the sulfur element (S), and the nitrogen element (N) at 9.0 to 11.5 at%, 1.8 to 2.6 at%, and 1.2 to 2.0 at%, respectively.

In the present invention, when the contents of the lithium element (Li), the sulfur element (S), and the nitrogen element (N) included in the coating layer formed on a surface of the positive electrode are adjusted in the above content range, a coating layer having excellent physical properties such as acid resistance, high-temperature durability, and the like may be firmly formed, thereby enhancing the high-rate performance and low-temperature output performance of the lithium secondary battery.

Also, like the positive electrode electrolyte film (a cathode electrolyte interface; CEI) formed during the activation of the lithium secondary battery, the coating layer may be formed on a surface of the positive electrode by an electrochemical reaction through the decomposition of the electrolyte composition during the activation of the lithium secondary battery. Therefore, the contents of the lithium element (Li), the sulfur element (S), and the nitrogen element (N) in the coating layer may be affected by the components constituting the electrolyte composition.

Specifically, the coating layer may be formed by the decomposition of the lithium salt, the electrolyte additive, and the like dissolved and/or dispersed in the non-aqueous organic solvent. The coating layer thus formed may contain a sulfur element (S) and a nitrogen element (N) derived from the electrolyte additive. For this purpose, the electrolyte additive may include a compound containing a sulfur element (S) and a nitrogen element (N). More specifically, the electrolyte additive may include an ionic compound represented by the following Formula 1, which includes a saturated hydrocarbon chain at one side centered on a sulfonylimide group, or has a parent nucleus to which a (meth)acrylate group or an (meth)acrylamide group is linked through a functional group having a structure in which oxygen atoms are introduced into the saturated hydrocarbon chain: 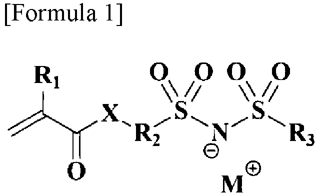 wherein:
R₁ is hydrogen or an alkyl group having 1 to 4 carbon atoms,
R₂ includes one or more of an alkylene group having 1 to 10 carbon atoms, an alkyleneoxy group having 1 to 10 carbon atoms, a cycloalkylene group having 5 to 10 carbon atoms, or 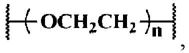
R₃ is a fluoro group, an alkyl group having 1 to 10 carbon atoms, an alkoxy group having 1 to 10 carbon atoms, or 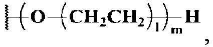 wherein one or more of hydrogen atoms included in the alkyl group, the alkoxy group, and 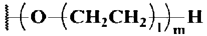 are optionally substituted with a fluorine atom,
X is an oxygen atom (O) or -NR₄,
R₄ is hydrogen or an alkyl group having 1 to 4 carbon atoms,
M includes one or more selected from lithium, sodium, potassium, a tetraalkylammonium having 1 to 4 carbon atoms, or a tetraalkylphosphonium having 1 to 4 carbon atoms,
l is an integer ranging from 1 to 6, and
m and n are each independently an integer ranging from 2 to 20.

Specifically, R₁ may be hydrogen or a methyl group,
R₂ may be a methylene group, an ethylene group, a propylene group, an oxymethylene group, an oxyethylene group, an oxypropylene group, a cyclopentylene group, a cyclohexylene group, a cycloheptylene group, 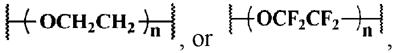
R₃ may be a fluoro group, a methyl group, an ethyl group, a propyl group, a methoxy group, an ethoxy group, 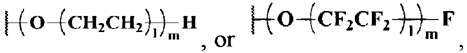
X may be an oxygen atom (O), -NH, or -NCH₃,
M may be lithium,
l may be an integer ranging from 1 or 2, and
m and n may be independently an integer ranging from 2 to 10.

As one example, the compound represented by Formula 1 may include any one or more compounds of the following <Structural Formula 1> to <Structural Formula 120>:

| | | |
|---|---|---|
| Structural Formula 1 | Structural Formula 2 | Structural Formula 3 |
| 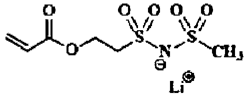 | 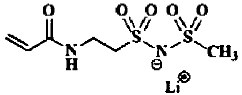 | 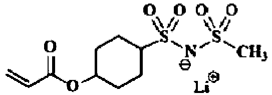 |
| Structural Formula 4 | Structural Formula 5 | Structural Formula 6 |
| 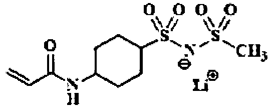 | 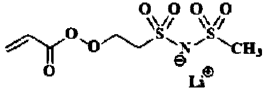 | 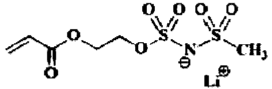 |
| Structural Formula 7 | Structural Formula 8 | Structural Formula 9 |
| 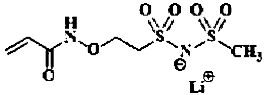 | 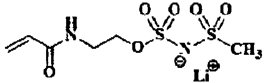 | 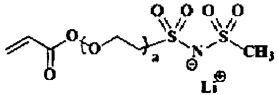 |
| Structural Formula 10 | Structural Formula 11 | Structural Formula 12 |
| 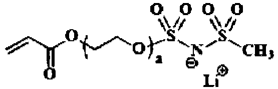 | 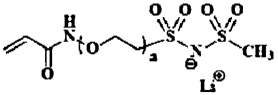 | 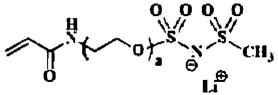 |
| | | |
| Structural Formula 13 | Structural Formula 14 | Structural Formula 15 |
| 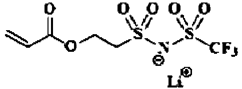 | 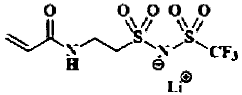 | 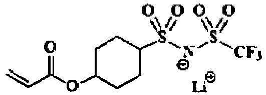 |
| Structural Formula 16 | Structural Formula 17 | Structural Formula 18 |
| 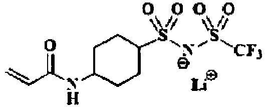 | 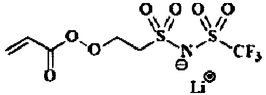 | 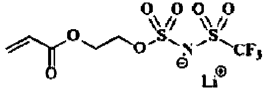 |
| Structural Formula 19 | Structural Formula 20 | Structural Formula 21 |
| 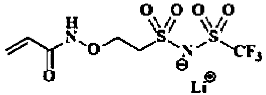 | 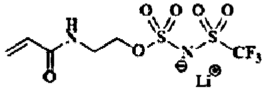 | 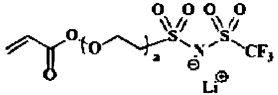 |
| Structural Formula 22 | Structural Formula 23 | Structural Formula 24 |
| 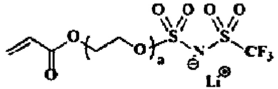 | 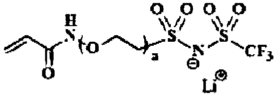 | 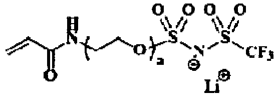 |
| Structural Formula 25 | Structural Formula 26 | Structural Formula 27 |
| 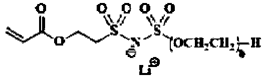 | 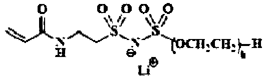 | 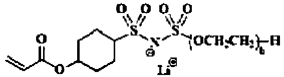 |
| Structural Formula 28 | Structural Formula 29 | Structural Formula 30 |
| 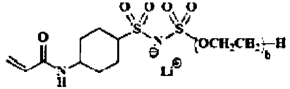 | 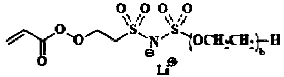 | 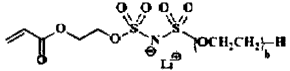 |
| Structural Formula 31 | Structural Formula 32 | Structural Formula 33 |
| 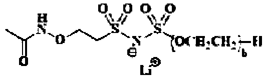 | 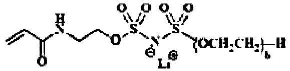 | 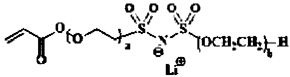 |
| Structural Formula 34 | Structural Formula 35 | Structural Formula 36 |
| 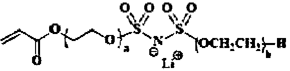 | 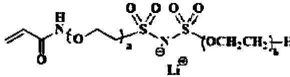 | 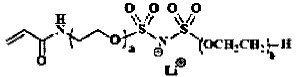 |
| | | |
| Structural Formula 37 | Structural Formula 38 | Structural Formula 39 |
| 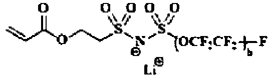 | 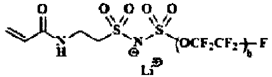 | 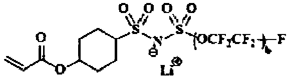 |
| Structural Formula 40 | Structural Formula 41 | Structural Formula 42 |
| 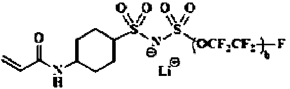 | 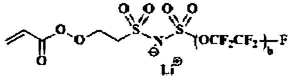 | 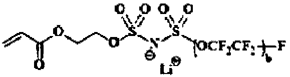 |
| Structural Formula 43 | Structural Formula 44 | Structural Formula 45 |
| 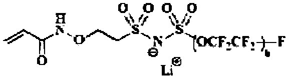 | 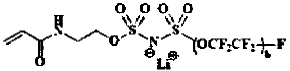 | 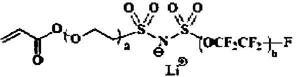 |
| Structural Formula 46 | Structural Formula 47 | Structural Formula 48 |
| 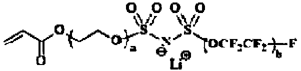 | 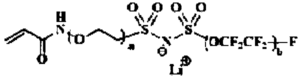 | 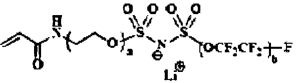 |
| Structural Formula 49 | Structural Formula 50 | Structural Formula 51 |
| 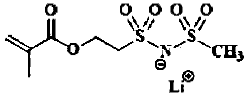 | 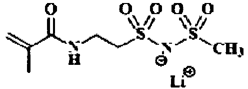 | 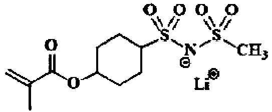 |
| Structural Formula 52 | Structural Formula 53 | Structural Formula 54 |
| 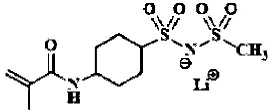 | 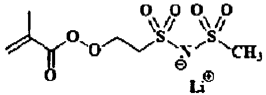 | 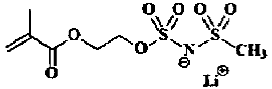 |
| Structural Formula 55 | Structural Formula 56 | Structural Formula 57 |
| 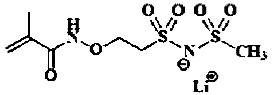 | 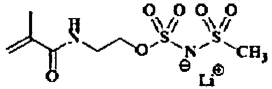 | 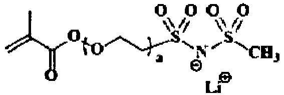 |
| Structural Formula 58 | Structural Formula 59 | Structural Formula 60 |
| 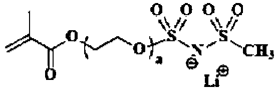 | 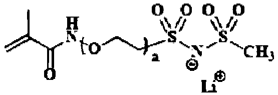 | 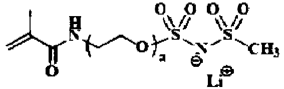 |
| | | |
| Structural Formula 61 | Structural Formula 62 | Structural Formula 63 |
| 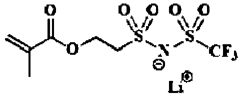 | 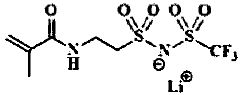 | 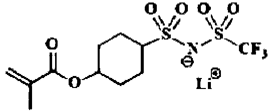 |
| Structural Formula 64 | Structural Formula 65 | Structural Formula 66 |
| 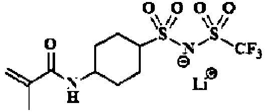 | 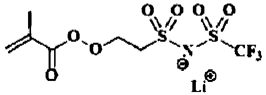 | 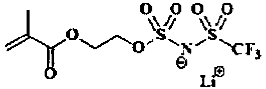 |
| Structural Formula 67 | Structural Formula 68 | Structural Formula 69 |
| 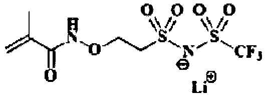 | 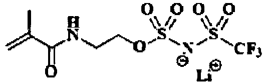 | 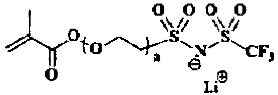 |
| Structural Formula 70 | Structural Formula 71 | Structural Formula 72 |
| 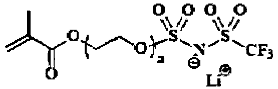 | 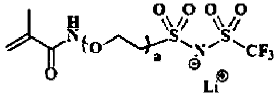 | 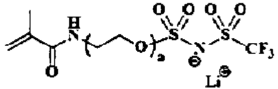 |
| Structural Formula 73 | Structural Formula 74 | Structural Formula 75 |
| 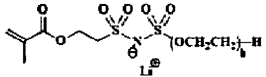 | 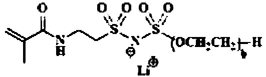 | 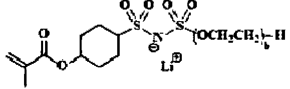 |
| Structural Formula 76 | Structural Formula 77 | Structural Formula 78 |
| 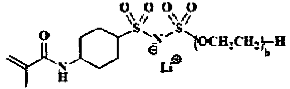 | 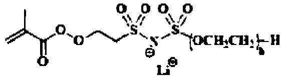 | 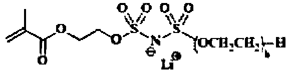 |
| Structural Formula 79 | Structural Formula 80 | Structural Formula 81 |
| 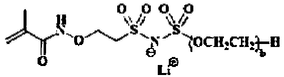 | 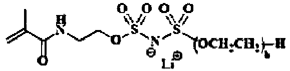 | 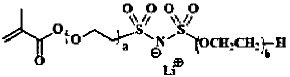 |
| Structural Formula 82 | Structural Formula 83 | Structural Formula 84 |
| 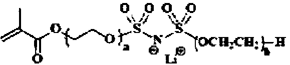 | 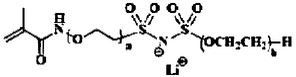 | 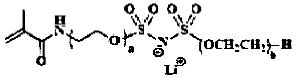 |
| | | |
| Structural Formula 85 | Structural Formula 86 | Structural Formula 87 |
| 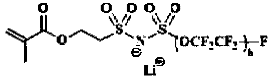 | 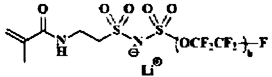 | 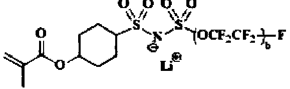 |
| Structural Formula 88 | Structural Formula 89 | Structural Formula 90 |
| 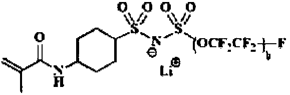 | 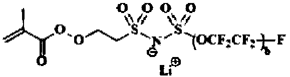 | 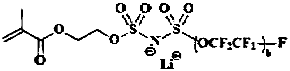 |
| Structural Formula 91 | Structural Formula 92 | Structural Formula 93 |
| 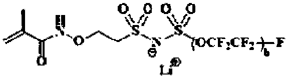 | 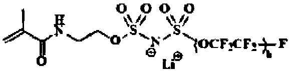 | 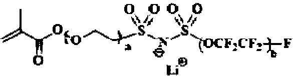 |
| Structural Formula 94 | Structural Formula 95 | Structural Formula 96 |
| 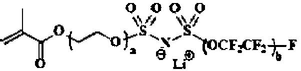 | 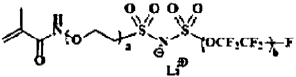 | 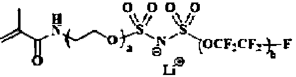 |
| Structural Formula 97 | Structural Formula 98 | Structural Formula 99 |
| 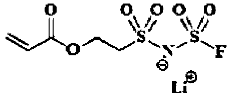 | 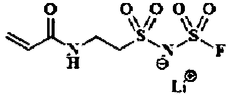 | 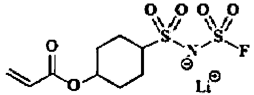 |
| Structural Formula 100 | Structural Formula 101 | Structural Formula 102 |
| 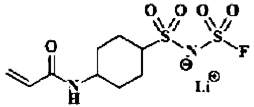 | 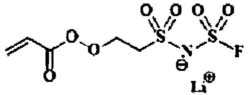 | 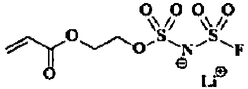 |
| Structural Formula 103 | Structural Formula 104 | Structural Formula 105 |
| 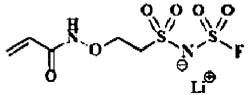 | 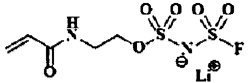 | 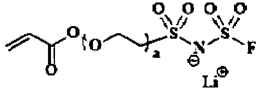 |
| Structural Formula 106 | Structural Formula 107 | Structural Formula 108 |
| 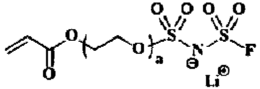 | 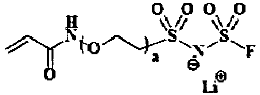 | 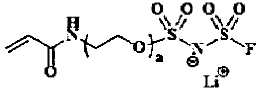 |
| | | |
| Structural Formula 109 | Structural Formula 110 | Structural Formula 111 |
| 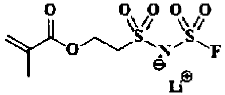 | 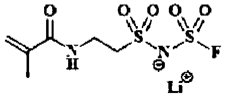 | 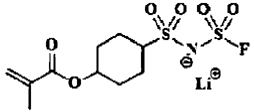 |
| Structural Formula 112 | Structural Formula 113 | Structural Formula 114 |
| 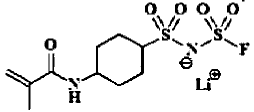 | 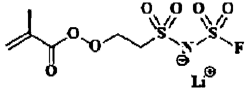 | 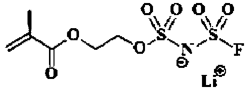 |
| Structural Formula 115 | Structural Formula 116 | Structural Formula 117 |
| 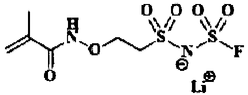 | 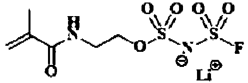 | 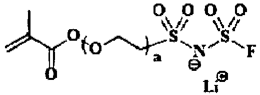 |
| Structural Formula 118 | Structural Formula 119 | Structural Formula 120 |
| 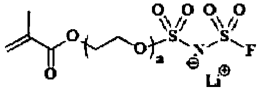 | 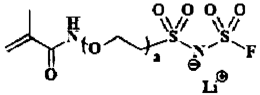 | 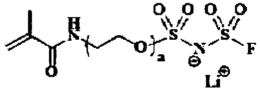 |

Since the electrolyte additive has the structure represented by Formula 1, an organic/inorganic coating layer may be uniformly formed on a surface of the negative electrode as well as the positive electrode during the activation of a secondary battery including the electrolyte additive. The coating layer thus formed may contain a lithium element (Li), a sulfur element (S), and a nitrogen element (N) in a specific content range according to the present invention.

Specifically, the compound represented by Formula 1 has a precursor structure in which (meth) acrylate or (meth) acrylamide is bonded through a functional group with a structure containing a saturated hydrocarbon chain on one side or having an oxygen atom introduced into the saturated hydrocarbon chain based on a sulfonylimide group. Due to these structural characteristics, the electrolyte additive has an oxidation potential of 3.9V or higher, thereby being able to form an organic/inorganic coating layer on the surface of the positive electrode during the activation process of a secondary battery. In contrast, when an electrolyte additive in which individual compounds each including the functional group, namely the sulfonylimide group; saturated hydrocarbon chains or hydrocarbon chains into which oxygen atoms have been introduced; and (meth)acrylate group or (meth) acrylamide group, respectively, are used, it is difficult to form an organic/inorganic coating layer on the surface of the positive electrode in the activation process of a secondary battery including such electrolyte additive, since the oxidation potential of the electrolyte additive does not appear above 3.9V.

As such, the organic/inorganic coating layer formed on the surface of the positive electrode by the electrolyte additive can improve the room-temperature high-rate discharge performance and low-temperature discharge efficiency of the lithium secondary battery. Moreover, when the lithium secondary battery is exposed to a high temperature, it is possible to suppress the generation of gas by decomposition of the electrolyte and improve the open-circuit voltage (OCV) drop phenomenon and capacity reduction of the battery occurring at the positive electrode, and thus the performance and high temperature stability of the battery may be further improved.

Also, the coating layer formed on a surface of the positive electrode may have a decreasing concentration of metal elements and an increasing concentration of non-metal elements (such as a carbon element (C), a sulfur element (S), a nitrogen element (N), and the like) as the coating layer progresses from a surface in contact with the positive electrode to a surface in contact with the separator. As one example, the coating layer may have a concentration gradient in which a concentration of a lithium element (Li) gradually decreases as the coating layer progresses from a surface in contact with the positive electrode to a surface in contact with the separator.

In addition, the coating layer may have a constant average thickness. Specifically, the coating layer may have an average thickness of 5 nm to 100 nm, more specifically an average thickness of 5 nm to 80 nm; 10 nm to 50 nm; or 10 nm to 30 nm. In the present invention, when the average thickness of the coating layer is controlled in the above thickness range, it is possible to prevent a great loss of electrolyte caused by the excessive formation of the coating layer, and at the same time, an insufficient inhibition of side reactions between the positive electrode and the electrolyte composition during charging and discharging of the lithium secondary battery due to a remarkable thinness of the coating layer may be prevented.

Meanwhile, the positive electrode may have a positive electrode mixture layer prepared by coating a positive electrode current collector with a slurry including a positive electrode active material and drying and pressing the positive electrode current collector, and may optionally further include a conductive material, a binder, other additives, and the like, when necessary.

Here, the positive electrode active material is a material that may cause an electrochemical reaction at the positive electrode current collector, and may include one or more of lithium metal oxides represented by the following Formulas 2 or 3, which are capable of reversible intercalation and deintercalation of lithium ions:

[Formula 2] Liₓ[Ni_{y}Co_{z}Mn_{w}M¹ᵥ]O₂

[Formula 3] LiM²ₚMn₍₂₋ₚ₎O₄

wherein:
M¹ includes one or more elements selected from W, Cu, Fe, V, Cr, Ti, Zr, Zn, Al, In, Ta, Y, La, Sr, Ga, Sc, Gd, Sm, Ca, Ce, Nb, Mg, B, or Mo,
x, y, z, w, and v are in a range of 1.0 ≤ x ≤ 1.30, 0.5 ≤ y<1, 0<z ≤ 0.3, 0<w ≤ 0.3, 0 ≤ v ≤ 0.1, respectively, provided that y + z + w + v = 1,
M² is Ni, Co, or Fe, and
p is in a range of 0.05 ≤ p ≤ 0.7.

Each of the lithium metal oxides represented by Formulas 2 and 3 is a material that contain high contents of nickel (Ni) and manganese (Mn), and has an advantage in that it may stably supply high-capacity and/or high-voltage electricity when it is used as the positive electrode active material. In addition, a charging potential of 4.0V or more is required to form a film on the surface of the positive electrode and/or the negative electrode during the activation of a secondary battery. Unlike conventional positive electrode active materials having a charging potential of less than about 4.0V, such as iron phosphate, the lithium metal oxides have a high charging potential of about 4.0V or more, so it is possible to easily form a film on the electrode.

In this case, the lithium metal oxide represented by Formula 2 may include LiNi_{0.8}Co_{0.1}Mn_{0.1}O₂, LiNi_{0.6}Co_{0.2}Mn_{0.2}O₂, LiNi_{0.9}Co_{0.05}Mn_{0.05}O₂, LiNi_{0.6}Co_{0.2}Mn_{0.1}Al_{0.1}O₂, LiNi_{0.6}Co_{0.2}Mn_{0.15}Al_{0.05}O₂, LiNi_{0.7}Co_{0.1}Mn_{0.1}Al_{0.1}O₂, and the like, and the lithium metal oxide represented by Formula 3 may include LiNi_{0.7}Mn_{1.3}O₄; LiNi_{0.5}Mn_{1.5}O₄; LiNi_{0.3}Mn_{1.7}O₄, and the like, which may be used alone or in combination.

Also, a material having high conductivity without causing a chemical change in the corresponding battery may be used as the positive electrode current collector. For example, stainless steel, aluminum, nickel, titanium, calcined carbon, and the like may be used. In the case of aluminum or stainless steel, those surface-treated with carbon, nickel, titanium, silver, and the like may also be used. In addition, the average thickness of the positive current collector may be properly adjusted in a range of 3 to 500 µm in consideration of the conductivity and total thickness of the manufactured positive electrode.

In addition, like the positive electrode, the negative electrode has a negative electrode mixture layer prepared by coating a negative electrode current collector with a negative electrode active material and drying and pressing the negative electrode current collector, and may optionally further include a conductive material, a binder, other additives, and the like, when necessary.

The negative electrode active material may include a carbon material. Specifically, the carbon material refers to a material that includes carbon atoms as a main ingredient. In this case, such a carbon material may include one or more selected from natural graphite, artificial graphite, expanded graphite, non-graphitizable carbon, carbon black, acetylene black, or ketjen black.

Also, the negative electrode active material may further include a silicon material in addition to the carbon material. The silicon material refers to a material that includes silicon atoms as a main ingredient. In this case, as such a silicon material, silicon (Si), silicon carbide (SiC), silicon monoxide (SiO), or silicon dioxide (SiO₂) may be used alone or in combination. When silicon monoxide (SiO) and silicon dioxide (SiO₂) are uniformly mixed and complexed as the silicon (Si)-containing material and included in the negative electrode mixture layer, it may be represented by a silicon oxide (SiO_{q}: provided that 0.8 ≤ q ≤ 2.5).

In addition, the silicon material may be included at 1 to 20% by weight, specifically 3 to 10% by weight; 8 to 15% by weight; 13 to 18% by weight; or 2 to 8% by weight, based on the total weight of the negative electrode active material. In the present invention, when the content of the silicon material is adjusted in the above content range, the energy density of the battery may be maximized.

Also, the negative electrode current collector is not particularly limited as long as it has high conductivity without causing a chemical change in the corresponding battery, and for example, as the negative electrode current collector, copper, stainless steel, aluminum, nickel, titanium, calcined carbon, and the like may be used, and in the case of aluminum or stainless steel, those surface-treated with carbon, nickel, titanium, silver, and the like may be used. In addition, the average thickness of the negative electrode current collector may be properly adjusted in a range of 1 to 500 µm in consideration of the conductivity and total thickness of the manufactured positive electrode.

Meanwhile, the separator interposed between the positive electrode and the negative electrode of each unit cell is an insulating thin film that has high ion permeability and mechanical strength, and separators widely used in the art can be used without particularly limitation. Specifically, separators including one or more polymers selected from polypropylene; polyethylene; or a polyethylene-propylene copolymer, which have chemical resistance and hydrophobicity, may be used. The separator may have the form of a porous polymer substrate, such as a sheet or a non-woven fabric, which includes the above-mentioned polymer. In this case, the separator may have the form of a composite separator in which the porous polymer substrate is coated with organic or inorganic particles by means of an organic binder. In addition, the pores of the separator may have an average diameter of 0.01 to 10 µm and an average thickness of 5 to 300 µm.

Furthermore, the electrolyte composition includes a non-aqueous organic solvent and a lithium salt in addition to the above-described electrolyte additive.

Here, the lithium salt may be applied without any particular limitation as long as it is used in the non-aqueous electrolyte in the art. Specifically, the lithium salt may include one or more selected from LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, or (FSO₂)₂NLi.

The concentration of the lithium salt is not particularly limited, but the lower limit of an appropriate concentration range is 0.5 mol/L or more, specifically 0.7 mol/L or more, and more specifically 0.9 mol/L or more, and the upper limit of the appropriate concentration range is 2.5 mol/L or less, specifically 2.0 mol/L or less, and more specifically 1.5 mol/L or less. When the concentration of the lithium salt is less than 0.5 mol/L, ion conductivity may be degraded, resulting in degraded cycle characteristics and output characteristics of a non-aqueous electrolyte battery. Also, when the concentration of the lithium salt is greater than 2.5 mol/L, an increase in viscosity of an electrolyte solution for a non-aqueous electrolyte battery may be caused, and thus ion conductivity may be degraded and cycle characteristics and output characteristics of the non-aqueous electrolyte battery may also be degraded.

Also, when a large amount of the lithium salt is dissolved in a non-aqueous organic solvent at one time, a liquid temperature may increase due to the heat of dissolution of the lithium salt. As such, when the temperature of the non-aqueous organic solvent remarkably increases due to the heat of dissolution of the lithium salt, decomposition of a fluorine-containing lithium salt may be promoted, resulting in the generation of hydrogen fluoride (HF). Hydrogen fluoride (HF) is undesirable because it causes the degradation of battery performance. Therefore, the temperature for dissolving the lithium salt in a non-aqueous organic solvent is not particularly limited, but may be adjusted in a range of -20 to 80°C, specifically in a range of 0 to 60°C.

In addition, the non-aqueous organic solvent used in the electrolyte composition may be applied without any particular limitation as long as it is used in the non-aqueous electrolyte in the art. Specifically, for example, aprotic organic solvents such as N-methyl-2-pyrrolidinone, ethylene carbonate (EC), propylene carbonate, butylene carbonate, dimethyl carbonate (DMC), diethyl carbonate (DEC), gamma-butyrolactone, 1,2-dimethoxy ethane (DME), tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, dioxolane derivative, sulfolane, methyl sulfolane, 1,3-dimethyl-2-imidazolidone, propylene carbonate derivatives, tetrahydrofuran derivatives, ether, methyl propionate, ethyl propionate, and the like may be used as the non-aqueous organic solvent.

Also, the non-aqueous organic solvent used in the present invention may be used alone, or two or more types may be used after mixing in any ratio and combination according to a purpose. Among them, propylene carbonate, ethylene carbonate, fluoroethylene carbonate, diethyl carbonate, dimethyl carbonate, and ethyl methyl carbonate are particularly preferred in terms of the electrochemical stability in an oxidation/reduction reaction and the chemical stability against heat or a reaction with a solute.

**In** addition, the electrolyte additive may be included at a specific content in the electrolyte composition. Specifically, the electrolyte additive including the compound represented by Formula 1 may be included at 0.01 to 5% by weight, based on the total weight of the electrolyte composition. More specifically, the electrolyte additive may be included at 0.05 to 3% by weight or 1.0 to 2.5% by weight, based on the total weight of the electrolyte composition. **In** the present invention, it is possible to prevent the wettability of the electrode and the separator from being degraded due to an increase in viscosity of the electrolyte composition while preventing the degradation of battery performance due to degraded ion conductivity of the electrolyte composition caused by the electrolyte additive being used at an excessive amount that is outside the above content range. **In** the present invention, the additive effect may be prevented from being insignificantly realized when the electrolyte additive is used at a trace amount that is outside the above content range.

Meanwhile, the electrolyte composition may further include an additive in addition to the above-described basic components. Without departing from the scope of the present invention, an additive generally used in the non-aqueous electrolyte of the present invention may be added at any ratio. Specifically, the additive may include compounds having an overcharge prevention effect, a negative electrode coating film-forming effect, and a positive electrode protection effect, such as cyclohexylbenzene, biphenyl, t-butylbenzene, carbonate, vinyl ethylene carbonate, difluoroanisole, fluoroethylene carbonate, propane sultone, succinonitrile, dimethyl vinylene carbonate, and the like. In addition, in the case of use in a non-aqueous electrolyte battery referred to as a lithium polymer battery, it is possible to use an electrolyte solution for a non-aqueous electrolyte battery after being pseudo-solidified by a gelling agent or a cross-linking polymer.

Furthermore, the lithium secondary battery according to the present invention is not particularly limited, but cylindrical, prismatic, pouch-type, or coin-type lithium secondary batteries may be widely applied according to a purpose of implementation. The lithium secondary battery according to one exemplary embodiment of the present invention may be a pouch-type secondary battery.

### Method of manufacturing lithium secondary battery

Also, according to one exemplary embodiment of the present invention, there is provided a method of manufacturing a lithium secondary battery according to the present invention as described above.

The method of manufacturing a lithium secondary battery according to the present invention may be performed by injecting an electrolyte composition into a battery case having an electrode assembly inserted therein to assemble a secondary battery, and initially charging, that is, activating, the assembled secondary battery to form a coating layer on a surface of the positive electrode provided in the electrode assembly.

Specifically, the method of manufacturing a lithium secondary battery includes: injecting an electrolyte composition into a battery case having an electrode assembly inserted therein to assemble a secondary battery, wherein the electrode assembly includes a positive electrode, a negative electrode, and a separator interposed between the positive electrode and the negative electrode; and charging the assembled secondary battery to an SOC of 40% to 70% to form a coating layer on a positive electrode mixture layer including a positive electrode active material.

Here, the assembling of the secondary battery is a process including all of the following steps: manufacturing an electrode assembly, inserting the manufactured electrode assembly into a battery case, and injecting an electrolyte composition into the battery case, and a method commonly performed in the art may be applied.

In addition, the electrolyte composition injected into the battery case may have a configuration including an electrolyte additive in addition to the non-aqueous organic solvent and the lithium salt as described above. In this case, the electrolyte additive may include a compound represented by the following Formula 1: 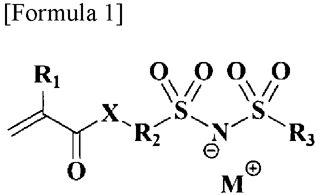 wherein:
R₁ is hydrogen or an alkyl group having 1 to 4 carbon atoms,
R₂ includes one or more of an alkylene group having 1 to 10 carbon atoms, an alkyleneoxy group having 1 to 10 carbon atoms, a cycloalkylene group having 5 to 10 carbon atoms, or 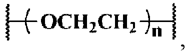
R₃ is a fluoro group, an alkyl group having 1 to 10 carbon atoms, an alkoxy group having 1 to 10 carbon atoms, or 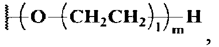 wherein one or more of hydrogen atoms included in the alkyl group, the alkoxy group, and 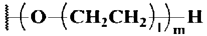 are optionally substituted with fluorine atoms,
X is an oxygen atom (O) or -NR₄,
R₄ is hydrogen or an alkyl group having 1 to 4 carbon atoms,
M includes one or more selected from the group consisting of lithium, sodium, potassium, a tetraalkylammonium having 1 to 4 carbon atoms, and a tetraalkylphosphonium having 1 to 4 carbon atoms,
l is an integer ranging from 1 to 6, and
each of m and n is an integer ranging from 2 to 20.

In the present invention, when the compound represented by Formula 1 is included as the electrolyte additive, an organic/inorganic coating layer may be uniformly formed on a surface of the negative electrode as well as the positive electrode during the activation of the secondary battery. The coating layer thus formed may contain a lithium element (Li), a sulfur element (S), and a nitrogen element (N) in a specific content range according to the present invention, thereby improving the room-temperature, high-rate discharge performance and low-temperature discharge efficiency of the lithium secondary battery. Moreover, when the lithium secondary battery is exposed to a high temperature, it is possible to suppress the generation of gas by decomposition of the electrolyte and improve the OCV drop phenomenon and capacity reduction of the battery occurring at the positive electrode, and thus the performance and high temperature stability of the battery may be further improved.

Also, the forming of the coating layer on the positive electrode mixture layer includes initially charging the assembled secondary battery to induce an electrochemical reaction of the electrolyte composition on the mixture layer, and eventually forming a coating layer on each of the positive electrode and the negative electrode. In this case, the initial charging may be performed until the lithium secondary battery is charged to an SOC of 40% to 70%, more specifically an SOC of 45% to 65%, in order to uniformly form an organic/inorganic coating layer on a surface of the electrode.

In addition, the conditions for performing the initial charging are not particularly limited, but the initial charging may be performed at 25 to 70°C, a charge termination voltage of 3.0 to 4.2 V, and a C-rate of 0.1 to 2.0C, specifically at 45 to 60°C and a C-rate of 0.5 to 1.5C; 0.8 to 1.2C; 1.0 to 1.5C; 0.5 to 1.0C; 0.5 to 0.9C; or 0.7 to 1.3C, to form each coating layer in a state in which an electrode assembly is sufficiently wetted so that a volume of the electrode assembly increases to the maximum.

In the present invention, when the charging conditions are controlled as described during the initial charging of the lithium secondary battery, a coating layer may be uniformly formed on a surface of each of the positive and negative electrodes. In particular, the contents of the lithium element (Li), the sulfur element (S), and the nitrogen element (N) in the coating layer formed on a surface of a positive electrode mixture layer of the positive electrode may be easily adjusted to 5 to 15 at%, 1.0 to 4.0 at%, and 0.5 to 3.0 at%, respectively.

The method of manufacturing a lithium secondary battery according to the present invention has a configuration as described above, and thus may uniformly form an organic/inorganic coating layer on a surface of the electrode, and simultaneously may control the contents of the lithium element (Li), the sulfur element (S), and the nitrogen element (N) in the coating layer formed on a surface of the positive electrode within a certain content range. The lithium secondary battery thus manufactured may have high high-rate discharge performance and low-temperature discharge efficiency. When the lithium secondary battery is exposed to a high temperature, it is possible to suppress the generation of gas by decomposition of the electrolyte and improve the OCV drop phenomenon and capacity reduction of the battery occurring at the positive electrode, and thus the performance and high temperature stability of the battery may be further improved.

Hereinafter, the present invention will be described in further detail with reference to examples and experimental examples below.

However, it should be understood that the following examples and experimental examples are merely intended to illustrate the present invention, and the contents of the present invention are not limited to the following examples and experimental example.

### Preparation Examples 1 to 6 and Comparative Preparation Examples 1 to 7: Preparation of electrolyte composition for lithium secondary battery

As a lithium salt, LiPF₆ was dissolved at a concentration of 1 M in a solvent obtained by mixing ethylene carbonate (EC) and ethyl methyl carbonate (EMC) at a volume ratio of 30:70. Thereafter, as shown in Table 1 below, electrolyte additives were weighed and dissolved based on the total weight of the electrolyte solution to prepare a non-aqueous electrolyte composition for a lithium secondary battery.

**[Table 1]**

| | Types of non-aqueous electrolyte additives | Content |
|---|---|---|
| Preparation Example 1 | 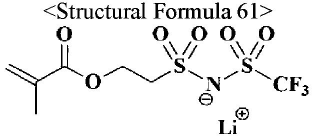 | 2% by weight |
| Preparation Example 2 | 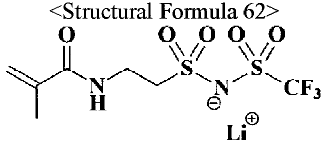 | 2% by weight |
| Preparation Example 3 | 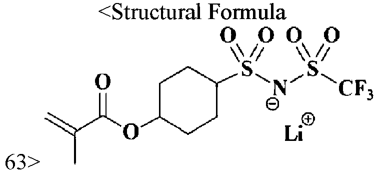 | 2% by weight |
| Preparation Example 4 | 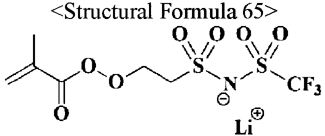 | 2% by weight |
| Preparation Example 5 | 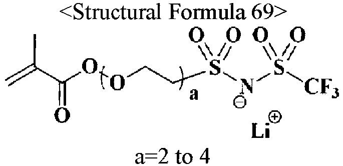 | 2% by weight |
| Preparation Example 6 | 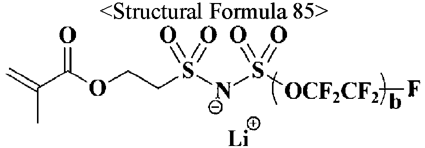 | 2% by weight |
| Comp. Preparation Example 1 | Not added | - |
| Comp. Preparation Example 2 | 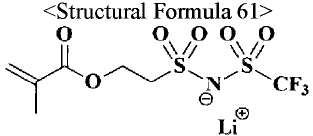 | 0.001% by weight |
| Comp. Preparation Example 3 | | 10% by weight |
| Comp. Preparation Example 4 | 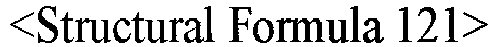 | 2% by weight |
| | 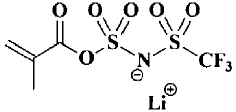 | |
| Comp. Preparation Example 5 | 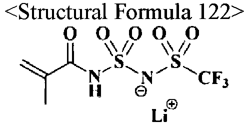 | 2% by weight |
| Comp. Preparation Example 6 | 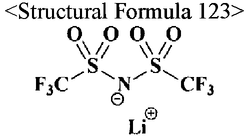 | 2% by weight |
| Comp. Preparation Example 7 | 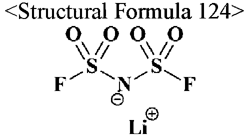 | 2% by weight |

### Comparative Preparation Example 8: Preparation of electrolyte composition for lithium secondary battery

A non-aqueous electrolyte composition for a lithium secondary battery was prepared in the same manner as in Preparation Example 1, except that an oligomer (weight average molecular weight: 2,500 to 5,000) obtained by polymerizing a compound represented by the following Structural Formula 61 was used as the electrolyte additive instead of the compound represented by Structural Formula 61.

### Examples 1 to 8 and Comparative Examples 1 to 10: Manufacture of lithium secondary battery

LiNi_{0.7}Co_{0.1}Mn_{0.1}Al_{0.1}O₂ having a particle size of 5 µm was prepared as a positive electrode active material, and a carbon-based conductive material and polyvinylidene fluoride as a binder were mixed in N-methyl pyrrolidone (NMP) at a weight ratio of 94:3:3 to form a slurry. Then, the slurry was cast on an aluminum thin plate, dried at 120°C in a vacuum oven, and then rolled to manufacture a positive electrode.

Separately, a negative electrode active material obtained by mixing natural graphite and artificial graphite at a weight ratio of 1:1 was prepared, and 97 parts by weight of the negative electrode active material and 3 parts by weight of a styrene-butadiene rubber (SBR) were mixed in water to form a slurry. Then, the slurry was cast on a copper thin plate, dried at 130°C in a vacuum oven, and then rolled to manufacture a negative electrode.

A 18 µm-thick separator composed of polypropylene was interposed between the obtained positive and negative electrodes, and inserted into a case. Thereafter, as shown in Table 2 below, each of the electrolyte compositions prepared in Examples and Comparative Examples was injected to assemble a 2.1 Ah lithium secondary battery.

Each of the assembled lithium secondary batteries was initially charged. Specifically, each of the lithium secondary batteries was initially charged to a charge termination voltage of 4.2 V at 55 ± 2°C under conditions as shown in Table 2 below to manufacture an activated lithium secondary battery.

**[Table 2]**

| | Types of electrolyte compositions | Initial charging conditions | |
|---|---|---|---|
| | | SOC | C-rate |
| Example 1 | Composition of Preparation Example 1 | 60% | 1.0C |
| Example 2 | Composition of Preparation Example 2 | 60% | 1.0C |
| Example 3 | Composition of Preparation Example 3 | 60% | 1.0C |
| Example 4 | Composition of Preparation Example 4 | 60% | 1.0C |
| Example 5 | Composition of Preparation Example 5 | 60% | 1.0C |
| Example 6 | Composition of Preparation Example 6 | 60% | 1.0C |
| Example 7 | Composition of Preparation Example 1 | 60% | 0.1C |
| Example 8 | Composition of Preparation Example 1 | 60% | 2.0C |
| Comp. Example 1 | Composition of Comparative Preparation Example 1 | 60% | 1.0C |
| Comp. Example 2 | Composition of Comparative Preparation Example 2 | 60% | 1.0C |
| Comp. Example 3 | Composition of Comparative Preparation Example 3 | 60% | 1.0C |
| Comp. Example 4 | Composition of Comparative Preparation Example 4 | 60% | 1.0C |
| Comp. Example 5 | Composition of Comparative Preparation Example 5 | 60% | 1.0C |
| Comp. Example 6 | Composition of Comparative Preparation Example 6 | 60% | 1.0C |
| Comp. Example 7 | Composition of Comparative Preparation Example 7 | 60% | 1.0C |
| Comp. Example 8 | Composition of Comparative Preparation Example 8 | 60% | 1.0C |
| Comp. Example 9 | Composition of Comparative Preparation Example 1 | 10% | 1.0C |
| Comp. Example 10 | Composition of Comparative Preparation Example 1 | 80% | 1.0C |

### Experimental Example 1

To check whether a coating layer was formed on surfaces of the positive and negative electrodes provided in the lithium secondary battery according to the present invention, secondary batteries were manufactured using the electrolyte compositions used in Example 1 and Comparative Examples 1 and 8, and an experiment was performed on each of the manufactured secondary batteries, as follows.

### A) Linear sweep voltammetric evaluation of three-electrode battery

To check whether a coating layer was formed on both surfaces of a positive electrode, first, each of the electrolyte compositions (Preparation Example 1 and Comparative Preparation Examples 1 and 8) used in Example 1 and Comparative Examples 1 and 8 was injected into batteries, each of which includes two platinum electrodes and a lithium metal electrode as a three-electrode system, to manufacture three-electrode batteries, and linear sweep voltammetric (LSV) analysis was performed on each of the manufactured batteries. In this case, the linear sweep voltammetry (LSV) was performed at 60°C under the conditions of an observation range of 3.0 to 6.0 V (based on lithium) and a measurement rate of 10 mV/s.

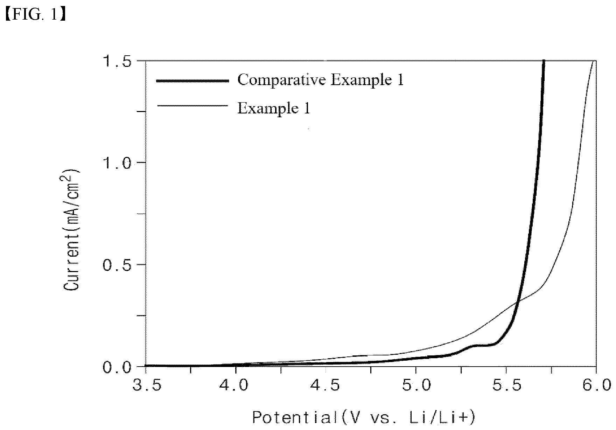

As a result, it can be seen that the electrolyte composition of Example 1 including the electrolyte additive represented by Formula 1 according to the present invention has an increased current near 3.9 ± 0.05 V compared to lithium, as shown in FIG. 1. This means that there is an oxidation reaction at a surface of the lithium metal near 3.9 ± 0.05 V, and indicates that the electrolyte additive in the electrolyte composition of Example 1 forms a film through an oxidation reaction at a surface of the positive electrode around 3.9 ± 0.05 V or more compared to lithium.

Also, it was confirmed that in the case of the electrolyte compositions used in Comparative Examples 1 and 8, electrolyte oxidation decomposition occurs at approximately 5.5 ± 0.05 V compared to lithium, but the electrolyte composition used in Example 1 exhibits electrolyte oxidation decomposition at approximately 5.7 ± 0.05 V compared to lithium. This means that the electrolyte additive represented by Formula 1 included in the electrolyte composition participated in the formation of the coating layer, and thus an oxidation potential window expands approximately 0.2 V compared to the electrolyte composition including no electrolyte additive.

In addition, it was confirmed that an oxidation reaction was induced at a lower potential than a surface of the platinum electrode due to the catalytic characteristics of carbon or a transition metal in the carbon electrode or the positive electrode.

From these results, it can be seen that an oxidation reaction is induced at a surface of the positive electrode during the activation of the lithium secondary battery according to the present invention to form an organic/inorganic coating layer.

### B) Differential capacity curve analysis of half-cell battery

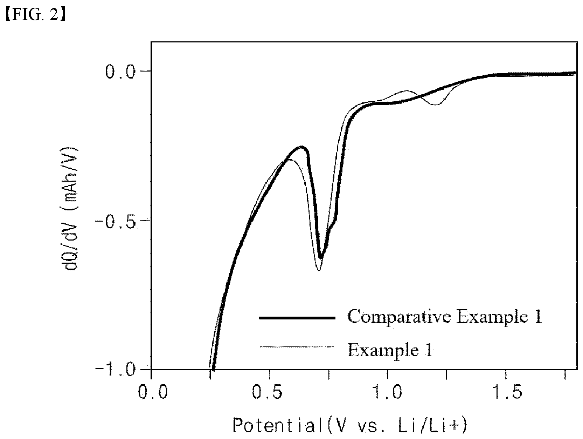

Next, to check whether a coating layer is formed on a surface of the negative electrode, a half-cell battery was manufactured using lithium metal and graphite (artificial graphite and natural graphite mixed at a weight ratio of 9:1). Thereafter, each of the electrolyte compositions (Preparation Example 1 and Comparative Preparation Examples 1 and 8) used in Example 1 and Comparative Examples 1 and 8 was injected into the half-cell battery. Then, the half-cell batteries were charged to 0.05 V at 25°C and a C-rate of 3.5 ± 0.5 V, and a potential value (V) and a capacity value (mAh) were measured, and a reduction potential value was determined by differentiating the capacity value with respect to the potential value (dQ/dV). The results are shown in FIG. 2 below.

Referring to FIG. 2, it was confirmed that, unlike the electrolyte compositions of Comparative Examples including no electrolyte additive, the electrolyte composition of Example 1 including the electrolyte additive represented by Formula 1 according to the present invention shows a descending peak at a voltage near 1.32 V compared to lithium. The descending peak indicates that a reduction reaction occurred at a surface of a graphite electrode, which is the negative electrode, and that the electrolyte additive represented by Formula 1 included in the electrolyte composition is converted into a film material through a reduction reaction at a surface of the negative electrode in the vicinity of 1.32 V compared to lithium.

From these results, it can be seen that a reduction reaction is induced at a surface of the positive electrode during the activation process of the lithium secondary battery according to the present invention to form an organic/inorganic coating layer.

### Experimental Example 2

To analyze a film formed on a surface of the electrode during the activation of the lithium secondary battery according to the present invention and evaluate the high-rate performance and low-temperature performance of the lithium secondary battery, an experiment was performed, as follows.

### A) Analysis of film on surface of electrode

For each of the secondary batteries manufactured in Examples and Comparative Examples, the coating layer formed on a surface of the positive electrode was subjected to X-ray photoelectron spectroscopy (XPS) to obtain a spectrum, and the types and contents of elements included in the coating layer were analyzed from the obtained spectrum.

In this case, the XPS analysis was performed using Thermo Fisher Scientific ESCALAB250 (acceleration voltage : 15 kV, 150 W, energy resolution: 1.0 eV, area of analysis: diameter of 500 micrometers, Sputter rate: 0.1 nm/sec)). Also, the results of the contents of lithium element (Li), sulfur element (S), and nitrogen element (N) among the analyzed elements are shown in Table 3.

### B) Evaluation of high-rate discharge capacity

For each of the secondary batteries manufactured in Examples and Comparative Examples, the high-rate discharge capacity at room temperature was measured.

Specifically, first, each of the activated lithium secondary batteries was charged to 4.2 V at 25°C and a C-rate of 0.33C in a CC-CV mode, and discharged to 2.5 V at a C-rate of 0.33C in a CC mode. This procedure referred to one charge/discharge cycle was performed for three cycles.

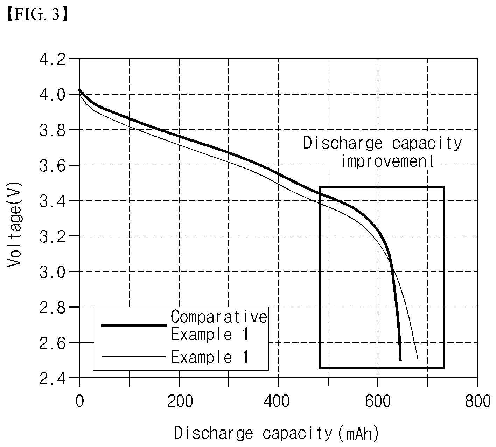

Next, each of the activated lithium secondary batteries was fully charged to 4.2 V at 25°C and a C-rate of 0.33C in a CC-CV mode and discharged to 2.5 V at a C-rate of 2.5C in a CC mode, and the high-rate discharge capacity at room temperature was measured. The results are shown in Table 3 and FIG. 3 below.

### C) Evaluation of low-temperature discharge capacity

For each of the secondary batteries manufactured in Examples and Comparative Examples, the low-temperature discharge capacity was measured.

Specifically, first, each of the activated lithium secondary batteries was charged to a voltage of 4.2 V at 25°C and a C-rate of 0.33C in a CC-CV mode, and discharged to a voltage of 2.5 V at a C-rate of 0.33C in a CC mode. This procedure referred to one charge/discharge cycle was performed for three cycles.

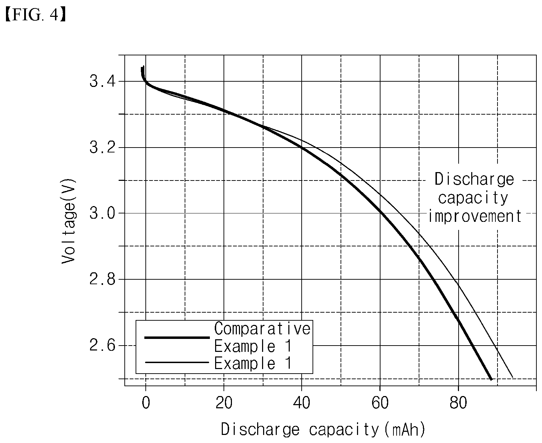

Next, each of the activated lithium secondary batteries was charged to 4.2 V at 25°C and a C-rate of 0.33C in a CC-CV mode and discharged to 2.5 V in a CC mode, and the capacity was maintained at an SOC of 10%. Then, each of the activated lithium secondary batteries was discharged to 2.5 V at -10°C and a C-rate of 0.04C in a CC mode, and the discharge capacity at low temperature was measured. The results are shown in Table 3 and FIG. 4 below.

**[Table 3]**

| | Content of elements in coating layer | | | High-rate discharge capacity [mAh] | Low-temperature discharge capacity [mAh] |
|---|---|---|---|---|---|
| | Li | S | N | | |
| Example 1 | 11.2 at% | 2.5 at% | 1.5 at% | 679.8 | 96.7 |
| Example 2 | 11.1 at% | 2.3 at% | 2.0 at% | 678.3 | 96.5 |
| Example 3 | 10.5 at% | 2.2 at% | 1.5 at% | 677.5 | 94.6 |
| Example 4 | 11.0 at% | 2.1 at% | 1.3 at% | 677.9 | 95.8 |
| Example 5 | 9.5 at% | 1.9 at% | 1.1 at% | 674.2 | 94.2 |
| Example 6 | 9.0 at% | 1.7 at% | 0.8 at% | 673.4 | 93.7 |
| Example 7 | 12.1 at% | 3.0 at% | 2.0 at% | 680.8 | 97.3 |
| Example 8 | 9.0 at% | 1.8 at% | 1.3 at% | 673.8 | 93.9 |
| Comp. Example 1 | 4.9 at% | 0.1 at% | 0.1 at% | 645.0 | 88.2 |
| Comp. Example 2 | 4.7 at% | 0.1 at% | 0.1 at% | 651.2 | 89.2 |
| Comp. Example 3 | 13.1 at% | 5.8 at% | 4.2 at% | 648.5 | 88.6 |
| Comp. Example 4 | 4.7 at% | 0.1 at% | 0.1 at% | 643.7 | 86.1 |
| Comp. Example 5 | 4.8 at% | 0.1 at% | 0.1 at% | 644.6 | 88.1 |
| Comp. Example 6 | 5.9 at% | 0.5 at% | 0.6 at% | 658.9 | 89.0 |
| Comp. Example 7 | 5.3 at% | 0.3 at% | 0.5 at% | 652.7 | 88.7 |
| Comp. Example 8 | 4.8 at% | 0.1 at% | 0.1 at% | 642.8 | 88.3 |
| Comp. Example 9 | 2.0 at% | 0.1 at% | 0.1 at% | 638.2 | 86.8 |
| Comp. Example 10 | 5.2 at% | 0.1 at% | 0.1 at% | 651.8 | 88.5 |

As shown in Table 3, it can be seen that the lithium secondary battery according to the present invention includes specific contents of lithium element (Li), sulfur element (S), and nitrogen element (N) on a surface of the positive electrode, and thus has excellent high-rate performance and low-temperature performance.

Specifically, it can be seen that a coating layer including lithium element (Li), sulfur element (S), and nitrogen element (N) at contents of 7 to 15 at%, 0.6 to 1.1 at%, and 1.8 to 3.1 at%, respectively, is formed on a surface of the positive electrode mixture layer of the positive electrode in all the lithium secondary batteries manufactured in Examples. Also, it was confirmed that the lithium secondary batteries of Examples including such a coating layer has a high room-temperature, high-rate discharge capacity of 670 mAh or more and a high low-temperature discharge capacity of 93 mAh or more.

From these results, it can be seen that the lithium secondary battery according to the present invention has a coating layer including specific contents of lithium element (Li), sulfur element (S), and nitrogen element (N) on a surface of the positive electrode mixture layer of the positive electrode, and thus has excellent room-temperature, high-rate discharge performance and low-temperature discharge performance.

As described above, the technical scope of the present invention is not limited to the content described in the detailed description of the specification, but should be defined by the claims.

## Claims

1. A lithium secondary battery, the lithium secondary battery comprising:
an electrode assembly comprising a positive electrode, a negative electrode, and a separator interposed between the positive electrode and the negative electrode; and
an electrolyte composition comprising a non-aqueous organic solvent, a lithium salt, and an electrolyte additive,
wherein the positive electrode has a coating layer on a positive electrode mixture layer comprising a positive electrode active material, and
the coating layer contains 5 to 15 at% of a lithium element (Li), 1.0 to 4.0 at% of a sulfur element (S), and 0.5 to 3.0 at% of a nitrogen element (N), measured as set out in the description.

2. The lithium secondary battery of claim 1, wherein the coating layer has an average thickness of 5 nm to 100 nm.

3. The lithium secondary battery of claim 1, wherein the electrolyte additive comprises a compound represented by the following Formula 1: 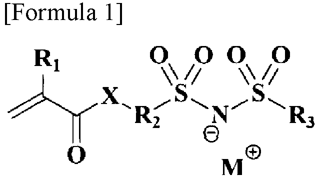 wherein:
R₁ is hydrogen or an alkyl group having 1 to 4 carbon atoms,
R₂ comprises one or more of an alkylene group having 1 to 10 carbon atoms, an alkyleneoxy group having 1 to 10 carbon atoms, a cycloalkylene group having 5 to 10 carbon atoms, or 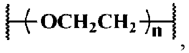
R₃ is a fluoro group, an alkyl group having 1 to 10 carbon atoms, an alkoxy group having 1 to 10 carbon atoms, or 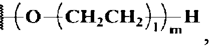 wherein one or more of hydrogen atoms included in the alkyl group, the alkoxy group, and 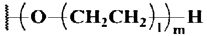 are optionally substituted with a fluorine atom,
X is an oxygen atom (O) or -NR₄, R₄ is hydrogen or an alkyl group having 1 to 4 carbon atoms,
M comprises one or more selected from lithium, sodium, potassium, a tetraalkylammonium having 1 to 4 carbon atoms, or a tetraalkylphosphonium having 1 to 4 carbon atoms,
l is an integer ranging from 1 to 6, and
m and n are each independently an integer ranging from 2 to 20.

4. The lithium secondary battery of claim 3, wherein:
R₁ is hydrogen or a methyl group,
R₂ comprises one or more of a methylene group, an ethylene group, a propylene group, an oxymethylene group, an oxyethylene group, an oxypropylene group, a cyclopentylene group, a cyclohexylene group, a cycloheptylene group, 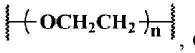 or 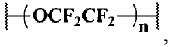
R₃ is a fluoro group, a methyl group, an ethyl group, a propyl group, a methoxy group, an ethoxy group, 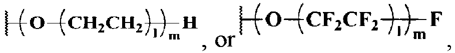
X is an oxygen atom (O), -NH, or -NCH₃,
M is lithium,
l is an integer of 1 or 2,
m and n are each independently an integer ranging from 2 to 10.

5. The lithium secondary battery of claim 1, wherein the electrolyte additive is included at 0.01 to 5% by weight, based on a total weight of the electrolyte composition.

6. The lithium secondary battery of claim 1, wherein the positive electrode mixture layer comprises one or more positive electrode active materials selected from lithium metal oxides represented by the following Formulas 2 or 3:
[Formula 2] Liₓ[Ni_{y}Co_{z}Mn_{w}M¹ᵥ]O₂
[Formula 3] LiM²ₚMn₍₂₋ₚ₎O₄
wherein:
M¹ comprises one or more elements selected from W, Cu, Fe, V, Cr, Ti, Zr, Zn, Al, In, Ta, Y, La, Sr, Ga, Sc, Gd, Sm, Ca, Ce, Nb, Mg, B, or Mo,
x, y, z, w, and v are in a range of 1.0 ≤ x ≤ 1.30, 0.5 ≤ y<1, 0<z ≤ 0.3, 0<w ≤ 0.3, and 0 ≤ v ≤ 0.1, provided that y + z + w + v = 1,
M² is Ni, Co, or Fe, and
p is in a range of 0.05 ≤ p ≤ 0.7.

7. The lithium secondary battery of claim 6, wherein the positive electrode active material comprises one or more selected from LiNi_{0.8}Co_{0.1}Mn_{0.1}O₂, LiNi_{0.6}Co_{0.2}Mn_{0.2}O₂, LiNi_{0.9}Co_{0.05}Mn_{0.05}O₂, LiNi_{0.6}Co_{0.2}Mn_{0.1}Al_{0.1}O₂, LiNi_{0.6}Co_{0.2}Mn_{0.15}Al_{0.05}O₂, LiNi_{0.7}Co_{0.1}Mn_{0.1}Al_{0.1}O₂, LiNi_{0.7}Mn_{1.3}O₄, LiNi_{0.5}Mn_{1.5}O₄, or LiNi_{0.3}Mn_{1.7}O₄.

8. The lithium secondary battery of claim 1, wherein the negative electrode has a negative electrode mixture layer containing a negative electrode active material on a negative electrode current collector, and
the negative electrode active material comprises one or more carbon materials selected from natural graphite, artificial graphite, expanded graphite, non-graphitizable carbon, carbon black, acetylene black, or ketjen black.

9. The lithium secondary battery of claim 8, wherein the negative electrode active material further comprises one or more silicon materials selected from silicon (Si), silicon carbide (SiC), or silicon oxide represented by SiO_{q}, wherein 0.8 ≤ q ≤ 2.5.

10. The lithium secondary battery of claim 9, wherein the silicon material is included at 1 to 20% by weight, based on a total weight of the negative electrode active material.

11. A method of manufacturing a lithium secondary battery, the method comprising:
assembling a lithium secondary battery by injecting an electrolyte composition into a battery case having an electrode assembly inserted; and
charging the assembled secondary battery to an SOC of 40% to 70% to form a coating layer on a positive electrode mixture layer,
wherein the electrode assembly comprises a positive electrode comprising a positive electrode mixture layer including a positive electrode active material, a negative electrode, and a separator interposed between the positive electrode and the negative electrode,
wherein the electrolyte composition comprises a non-aqueous organic solvent, a lithium salt, and an electrolyte additive, and
the coating layer contains 5 to 15 at% of a lithium element (Li), 1.0 to 4.0 at% of a sulfur element (S), and 0.5 to 3.0 at% of a nitrogen element (N), measured as set out in the description.

12. The method of claim 11, wherein the charging is performed at 25 to 70°C and a C-rate of 0.1C to 2.0C.

## Patentansprüche

1. Lithium-Sekundärbatterie, wobei die Lithium-Sekundärbatterie umfasst:
eine Elektrodenanordnung, umfassend eine positive Elektrode, eine negative Elektrode und einen zwischen der positiven Elektrode und der negativen Elektrode vorgesehenen Separator; und
eine Elektrolytzusammensetzung, umfassend ein nichtwässriges organisches Lösungsmittel, ein Lithiumsalz und ein Elektrolyt-Additiv,
worin die positive Elektrode eine Beschichtungsschicht auf einer Positivelektroden-Mischungsschicht, umfassend ein Positivelektroden-Aktivmaterial, aufweist, und
die Beschichtungsschicht 5 bis 15 Atom-% eines Lithiumelements (Li) 1,0 bis 4,0 Atom-% eines Schwefelelements (S) und 0,5 bis 3,0 Atom-% eines Stickstoffelements (N) enthält, gemessen wie in der Beschreibung angegeben.

2. Lithium-Sekundärbatterie gemäß Anspruch 1, worin die Beschichtungsschicht eine mittlere Dicke von 5 nm bis 100 nm aufweist.

3. Lithium-Sekundärbatterie gemäß Anspruch 1, worin das Elektrolyt-Additiv eine durch die folgende Formel 1 dargestellte Verbindung umfasst: 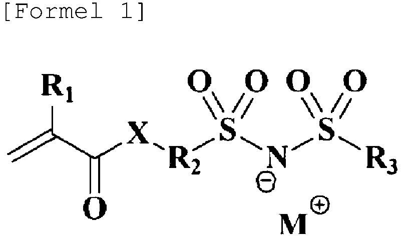 worin
R₁ Wasserstoff oder eine Alkylgruppe mit 1 bis 4 Kohlenstoffatomen ist,
R₂ eines oder mehrere von einer Alkylengruppe mit 1 bis 10 Kohlenstoffatomen, einer Alkylenoxygruppe mit 1 bis 10 Kohlenstoffatomen, einer Cycloalkylengruppe mit 5 bis 10 Kohlenstoffatomen oder 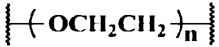 umfasst,
R₃ eine Fluorgruppe, eine Alkylgruppe mit 1 bis 10 Kohlenstoffatomen, eine Alkoxygruppe mit 1 bis 10 Kohlenstoffatomen oder 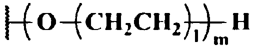 ist, worin eines oder mehrere der in der Alkylgruppe, der Alkoxygruppe und 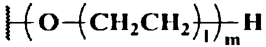 enthaltenen Wasserstoffatome optional durch ein Fluoratom substituiert sind,
X ein Sauerstoffatom (O) oder -NR₄ ist, R₄ Wasserstoff oder eine Alkylgruppe mit 1 bis 4 Kohlenstoffatomen ist,
M eines oder mehrere umfasst, ausgewählt aus Lithium, Natrium, Kalium, einem Tetraalkylammonium mit 1 bis 4 Kohlenstoffatomen oder einem Tetraalkylphosphonium mit 1 bis 4 Kohlenstoffatomen,
l eine ganze Zahl im Bereich von 1 bis 6 ist und
m und n jeweils unabhängig eine ganze Zahl im Bereich von 2 bis 20 sind.

4. Lithium-Sekundärbatterie gemäß Anspruch 3, worin
R₁ Wasserstoff oder eine Methylgruppe ist,
R₂ eines oder mehrere von einer Methylengruppe, einer Ethylengruppe, einer Propylengruppe, einer Oxymethylengruppe, einer Oxyethylengruppe, einer Oxypropylengruppe, einer Cyclopentylengruppe, einer Cyclohexylengruppe, einer Cycloheptylengruppe, 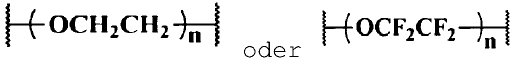 umfasst,
R₃ eine Fluorgruppe, eine Methylgruppe, eine Ethylgruppe, einer Propylgruppe, eine Methoxygruppe, eine Ethoxygruppe, 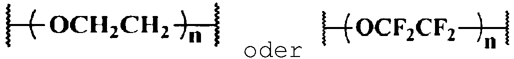 ist,
X ein Sauerstoffatom (O), -NH oder -NCH₃ ist,
M Lithium ist,
l eine ganze Zahl von 1 oder 2 ist,
m und n jeweils unabhängig eine ganze Zahl im Bereich von 2 bis 20 sind.

5. Lithium-Sekundärbatterie gemäß Anspruch 1, worin das Elektrolyt-Additiv in einer Menge von 0,01 bis 5 Gew.-% umfasst ist, bezogen auf das Gesamtgewicht der Elektrolytzusammensetzung.

6. Lithium-Sekundärbatterie gemäß Anspruch 1, worin die Positivelektroden-Mischungsschicht eines oder mehrere Positivelektroden-Aktivmaterialien umfasst, ausgewählt aus durch die folgenden Formeln 2 oder 3 dargestellten Lithium-Metalloxiden:
[Formel 2 Liₓ[Ni_{y}Co_{z}Mn_{w}M¹ᵥ]O₂
[Formel 3] LiM²ₚMn₍₂₋ₚ₎O₄
worin M¹ eines oder mehrere Elemente umfasst, ausgewählt aus W, Cu, Fe, V, Cr, Ti, Zr, Zn, Al, In, Ta, Y, La, Sr, Ga, Sc, Gd, Sm, Ca, Ce, Nb, Mg, B oder Mo,
x, y, z und w jeweils im Bereich von 1,0 ≤ x ≤ 1,30, 0,5 ≤ y < 1,0 < z ≤ 0,3, 0 < w ≤ 0,3 bzw. 0 ≤ v ≤ 0,1 liegen, wobei y + z + w + v = 1,
M² Ni, Co oder Fe ist, und
p im Bereich von 0,05 ≤ p ≤ 0,7 liegt.

7. Lithium-Sekundärbatterie gemäß Anspruch 6, worin das Positivelektroden-Aktivmaterial eines oder mehrere umfasst, ausgewählt aus LiNi_{0,8}Co_{0,1}Mn_{0,1}O₂, LiNi_{0,6}Co_{0,2}Mn_{0,2}O₂, LiNi_{0,9}Co_{0,05}Mn_{0,05}O₂, LiNi_{0,6}Co_{0,2}Mn_{0,1}Al_{0,1}O₂, LiNi_{0,6}Co_{0,2}Mn_{0,15}Al_{0,05}O₂, LiNi_{0,7}Co_{0,1}Mn_{0,1}Al_{0,1}O₂, LiNi_{0,7}Mn_{1,3}O₄, LiNi_{0,5}Mn_{1,5}O₄ oder LiNi_{0,3}Mn_{1,7}O₄.

8. Lithium-Sekundärbatterie gemäß Anspruch 1, worin die negative Elektrode eine Negativelektroden-Mischungsschicht, umfassend ein Negativelektroden-Aktivmaterial, auf einem Negativelektroden-Stromabnehmer aufweist, und
das Negativelektroden-Aktivmaterial eines oder mehrere Kohlenstoffmaterialien umfasst, ausgewählt aus natürlichem Graphit, künstlichem Graphit, expandiertem Graphit, nicht-graphitierbarem Kohlenstoff, Ruß Acetylenruß oder Ketjen-Ruß.

9. Lithium-Sekundärbatterie gemäß Anspruch 8, worin das Negativelektroden-Aktivmaterial ferner eines oder mehrere Siliciummaterialien umfasst, ausgewählt aus Silicium (Si), Siliciumcarbid (SiC) oder durch SiO_{q} dargestelltes Siliciumoxid, worin 0,8 ≤ q ≤2,5.

10. Lithium-Sekundärbatterie gemäß Anspruch 9, worin das Siliciummaterial in einer Menge von 1 bis 20 Gew.-% umfasst ist, bezogen auf das Gesamtgewicht des Negativelektroden-Aktivmaterials.

11. Verfahren zur Herstellung einer Lithium-Sekundärbatterie, wobei das Verfahren umfasst:
Zusammensetzen einer Lithium-Sekundärbatterie durch Einbringen einer Elektrolytzusammensetzung in ein Batteriegehäuse, in das eine Elektrodenanordnung eingebracht ist; und
Laden der zusammengesetzten Sekundärbatterie zu einem SOC von 40 % bis 70 %, um eine Beschichtungsschicht auf einer Positivelektroden-Mischungsschicht zu bilden,
worin die Elektrodenanordnung eine positive Elektrode, umfassend eine Positivelektroden-Mischungsschicht, umfassend ein Positivelektroden-Aktivmaterial, eine negative Elektrode und einen zwischen der positiven Elektrode und der negativen Elektrode vorgesehen Separator umfasst,
worin die Elektrolytzusammensetzung ein nichtwässriges organisches Lösungsmittel, ein Lithiumsalz und ein Elektrolyt-Additiv umfasst, und
die Beschichtungsschicht 5 bis 15 Atom-% eines Lithiumelements (Li), 1,0 bis 4,0 Atom-% eines Schwefelelements (S) und 0,5 bis 3,0 Atom-% eines Stickstoffelements (N) umfasst, gemessen wie in der Beschreibung angegeben.

12. Verfahren gemäß Anspruch 11, worin das Laden bei 25 bis 70°C und einer C-Rate von 0,1C bis 2,0C durchgeführt wird.

## Revendications

1. Batterie secondaire au lithium, la batterie secondaire au lithium comprenant :
un ensemble d'électrodes comprenant une électrode positive, une électrode négative et un séparateur interposé entre l'électrode positive et l'électrode négative ; et
une composition électrolytique comprenant un solvant organique non aqueux, un sel de lithium, et un additif électrolytique,
dans lequel l'électrode positive présente une couche de revêtement sur une couche de mélange d'électrode positive comprenant un matériau actif d'électrode positive, et
la couche de revêtement contient 5 à 15 % atomique d'un élément lithium (Li), 1,0 à 4,0 % atomique d'un élément soufre (S), et 0,5 à 3,0 % atomique d'un élément azote (N), mesurés comme indiqué dans la description.

2. Batterie secondaire au lithium selon la revendication 1, dans laquelle la couche de revêtement présente une épaisseur moyenne de 5 nm à 100 nm.

3. Batterie secondaire au lithium selon la revendication 1, dans laquelle l'additif électrolytique comprend un composé représenté par la Formule 1 suivante : 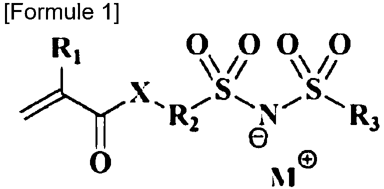 dans lequel :
R₁ est hydrogène ou un groupe alkyle présentant 1 à 4 atomes de carbone,
R₂ comprend un ou plusieurs parmi un groupe alkylène présentant 1 à 10 atomes de carbone, un groupe alkylèneoxy présentant 1 à 10 atomes de carbone, un groupe cycloalkylène présentant 5 à 10 atomes de carbone ou 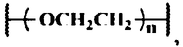
R₃ est un groupe fluoro, un groupe alkyle présentant 1 à 10 atomes de carbone, un groupe alcoxy présentant 1 à 10 atomes de carbone ou 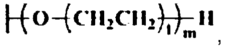 dans lequel un ou plusieurs des atomes d'hydrogène inclus dans le groupe alkyle, le groupe alcoxy, et 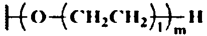 sont facultativement substitués par un atome de fluor,
X est un atome d'oxygène (O) ou -NR₄, R₄ est hydrogène ou un groupe alkyle présentant 1 à 4 atomes de carbone,
M comprend un ou plusieurs éléments sélectionnés parmi le lithium, le sodium, le potassium, un tétraalkylammonium présentant 1 à 4 atomes de carbone ou un tétraalkylphosphonium présentant 1 à 4 atomes de carbone,
l est un nombre entier allant de 1 à 6, et
m et n sont chacun indépendamment un nombre entier allant de 2 à 20.

4. Batterie secondaire au lithium selon la revendication 3, dans laquelle :
R₁ est un hydrogène ou un groupe méthyle,
R₂ comprend un ou plusieurs parmi un groupe méthylène, un groupe éthylène, un groupe propylène, un groupe oxyméthylène, un groupe oxyéthylène, un groupe oxypropylène, un groupe cyclopentylène, un groupe cyclohexylène, un groupe cycloheptylène, 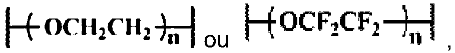
R₃ est un groupe fluoro, un groupe méthyle, un groupe éthyle, un groupe propyle, un groupe méthoxy, un groupe éthoxy, 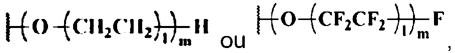
X est un atome d'oxygène (O), -NH ou -NCH₃,
M est un lithium,
l est un nombre entier de 1 ou 2,
m et n sont chacun indépendamment un nombre entier allant de 2 à 10.

5. Batterie secondaire au lithium selon la revendication 1, dans laquelle l'additif électrolytique est inclus à 0,01 à 5 % en poids, sur la base d'un poids total de la composition électrolytique.

6. Batterie secondaire au lithium selon la revendication 1, dans laquelle la couche de mélange d'électrode positive comprend un ou plusieurs matériaux actifs d'électrode positive sélectionnés parmi des oxydes métalliques de lithium représentés par les Formules 2 ou 3 suivantes :
[Formule 2] Liₓ[Ni_{y}Co_{z}Mn_{w}M¹ᵥ]O₂
[Formule 3] LiM²ₚMn₍₂₋ₚ₎O₄
dans lequel :
M¹ comprend un ou plusieurs éléments sélectionnés parmi W, Cu, Fe, V, Cr, Ti, Zr, Zn, Al, In, Ta, Y, La, Sr, Ga, Sc, Gd, Sm, Ca, Ce, Nb, Mg, B, ou Mo,
x, y, z, w, et v sont dans une plage de 1,0 ≤ x ≤ 1,30, 0,5 ≤ y < 1, 0 < z ≤ 0,3, 0 < w ≤ 0,3, et 0 ≤ v ≤ 0,1 à condition que y + z + w + v = 1,
M² est Ni, Co ou Fe, et
p est dans une plage de 0,05 ≤ p ≤ 0,7.

7. Batterie secondaire au lithium selon la revendication 6, dans laquelle le matériau actif d'électrode positive comprend un ou plusieurs éléments sélectionnés parmi LiNi_{0,8}Co_{0,1}Mn_{0,1}O₂, LiNi_{0,6}Co_{0,2}Mn_{0,2}O₂, LiNi_{0,9}Co_{0,05}Mn_{0,05}O₂, LiNi_{0,6}Co_{0,2}Mn_{0,1}Al_{0,1}O₂, LiNi_{0,6}Co_{0,2}Mn_{0,15}Al_{0,05}O₂, LiNi_{0,7}Co_{0,1}Mn_{0,1}Al_{0,1}O₂, LiNi_{0,7}Mn_{1,3}O₄, LiNi_{0,5}Mn_{1,5}O₄, ou LiNi_{0,3}Mn_{1,7}O₄.

8. Batterie secondaire au lithium selon la revendication 1, dans laquelle l'électrode négative présente une couche de mélange d'électrode négative qui contient un matériau actif d'électrode négative sur un collecteur de courant d'électrode négative, et
le matériau actif d'électrode négative comprend un ou plusieurs matériaux carbonés sélectionnés parmi le graphite naturel, le graphite artificiel, le graphite expansé, le carbone dur, le noir de carbone, le noir d'acétylène, ou le noir de Ketjen.

9. Batterie secondaire au lithium selon la revendication 8, dans laquelle le matériau actif d'électrode négative comprend en outre un ou plusieurs matériaux de silicium sélectionnés parmi le silicium (Si), le carbure de silicium (SiC) ou l'oxyde de silicium représenté par SiO_{q}, dans lequel 0,8 ≤ q ≤ 2,5.

10. Batterie secondaire au lithium selon la revendication 9, dans laquelle le matériau de silicium est inclus à 1 à 20 % en poids, sur la base d'un poids total du matériau actif d'électrode négative.

11. Procédé de fabrication d'une batterie secondaire au lithium, le procédé comprenant :
l'assemblage d'une batterie secondaire au lithium par injection d'une composition électrolytique dans un boîtier de batterie présentant un ensemble d'électrodes inséré ; et
la charge de la batterie secondaire assemblée à un SOC de 40 % à 70 % pour former une couche de revêtement sur une couche de mélange d'électrode positive,
dans lequel l'ensemble d'électrodes comprend une électrode positive comprenant une couche de mélange d'électrode positive incluant un matériau actif d'électrode positive, une électrode négative, et un séparateur interposé entre l'électrode positive et l'électrode négative,
dans lequel la composition électrolytique comprend un solvant organique non aqueux, un sel de lithium, et un additif électrolytique, et
la couche de revêtement contient 5 à 15 % atomique d'un élément lithium (Li), 1,0 à 4,0 % atomique d'un élément soufre (S), et 0,5 à 3,0 % atomique d'un élément azote (N), mesurés comme indiqué dans la description.

12. Procédé selon la revendication 11, dans lequel la charge est effectuée de 25 à 70 °C et à un taux C de 0,1 C à 2,0 C.
